# EUROPÄISCHE PATENTSCHRIFT

(11) **EP 2 764 519 B1**
(45) Veröffentlichungstag und Bekanntmachung des Hinweises auf die Patenterteilung: **28.10.2015**
(21) Anmeldenummer: 11802049.4
(22) Anmeldetag: 15.12.2011
(51) Int. Cl.: H01B 3/00

(54) **VERFAHREN ZUR HERSTELLUNG EINES GLIMMSCHUTZES, SCHNELLHÄRTENDES GLIMMSCHUTZSYSTEM UND ELEKTRISCHE MASCHINE**
METHOD FOR PRODUCING A CORONA SHIELD, FAST-CURING CORONA SHIELD SYSTEM, AND ELECTRIC MACHINE
PROCÉDÉ DE FABRICATION D'UNE PROTECTION ANTI-EFFLUVES, SYSTÈME ANTI-EFFLUVES À DURCISSEMENT RAPIDE ET MACHINES ÉLECTRIQUES ASSOCIÉES

(43) Veröffentlichungstag der Anmeldung: 13.08.2014
(73) Patentinhaber: Siemens Aktiengesellschaft, 80333 München (DE)
(72) Erfinder: BROCKSCHMIDT, Mario, 45131 Essen (DE); KEMPEN, Stefan, 59821 Arnsberg (DE); POHLMANN, Friedhelm, 45355 Essen (DE); SCHMIDT, Guido, 42799 Leichlingen (DE)
(86) Internationale Anmeldenummer: PCT/EP2011/072942
(87) Internationale Veröffentlichungsnummer: WO 2013/087112

(56) Entgegenhaltungen:
- WO-A1-00/13191
- DE-A1- 3 045 462
- DE-A1- 4 218 928

## Beschreibung

Die Erfindung betrifft ein Verfahren zur Herstellung eines Glimmschutzes, ein schnellhärtendes Glimmschutzsystem und eine elektrische Maschine.

Glimmschutz wird bei vielen elektrischen Anwendungen, insbesondere bei Generatoren verwendet, wie in der EP 1 995 850 B1 beschrieben.

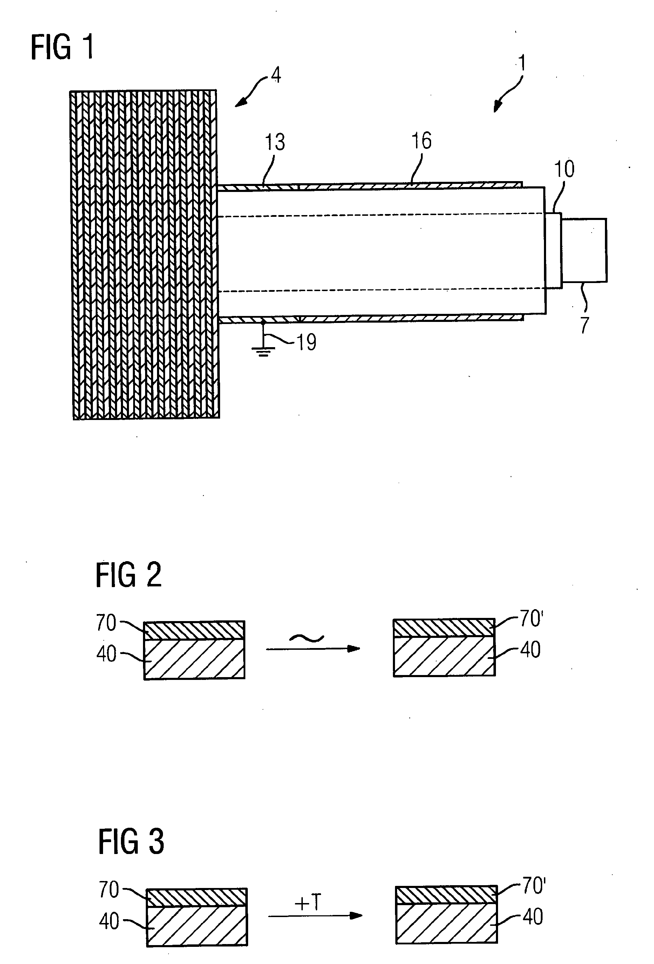

Um Teilentladungen zu vermeiden muss die Hauptisolierung von Generatorwicklungsstäben bei Betriebsspannungen von einigen Kilovolt mit einer inneren und einer äußeren Leitschicht gegen Hohlräume und Ablösungen abgeschirmt werden. Die elektrische Feldstärke wird in der Hauptisolierung ausgehend von der inneren Potenzialsteuerung 10 (Fig. 1) (IPS) in radialer Richtung bis zum Außenglimmschutz 13 (Fig. 1) (AGS) abgebaut. Am Ende des Generatorwicklungsstabes, im Bereich der Austrittstelle der Wicklungsstäbe aus dem Ständerblechpaket, endet der AGS, während die Hauptisolierung in Richtung Stabende weitergeführt wird. Diese Anordnung stellt eine typische Gleitanordnung mit extrem niedriger Teilentladungseinsetzspannung dar. Das elektrische Feld hat in diesem Bereich neben der radialen auch eine starke nichtlineare tangentiale Komponente parallel zur Isolierstoffoberfläche/Grenzfläche. Die größte Feldstärke tritt am Ende/an der Kante des AGS auf. Daher ist es erforderlich, für eine Feldsteuerung an der Kante des Außenglimmschutzes und für eine Festigkeitserhöhung in der Umgebung der freiliegenden Hauptisolierung zu sorgen. Dies wird üblicherweise durch die Herstellung eines Endenglimmschutzes 16 (Fig. 1) erreicht. Zur Unterdrückung von Gleitentladungen werden üblicherweise resistive Potenzialsteuerungen durch halbleitende Lacke oder Bänder vorwiegend auf der Basis von Siliziumkarbid oder anderen elektrisch halbleitenden Füllstoffen eingesetzt.

Ziel der Potenzialsteuerung ist es, den tangentialen Potenzialabbau entlang der Isolierstoffoberfläche zu ver-gleichmäßigen und im Idealfall zu linearisieren. Dies wird erreicht, wenn pro Längeneinheit immer der gleiche Spannungsbetrag abfällt. Hierfür wird ein in axialer Richtung ortsabhängiger und spannungsabhängiger Widerstandsbelag hergestellt.

Die Zeitdauer, um bisher kommerzielle Materialien genügend auszuhärten und zu verfestigen, ist dabei insbesondere bei Lacken, aber auch Bändern sehr groß, da über mehrere Arbeitsschichten hinweg mehrere Lackschichten aufgetragen werden müssen und zwischen dem Auftrag ein gewisses Zeitintervall abgewartet werden muss, um die nachfolgende Schicht wieder überstreichen zu können.

Der Endglimmschutz wird heute entweder durch ein- oder mehrlagiges Umwickeln mit elektrisch halbleitenden Bändern oder durch Aufbringen einer oder mehrerer Schichten eines elektrisch halbleitenden Lackes realisiert.

Die halbleitenden Bänder bestehen üblicherweise aus einem elektrisch nicht leitfähigem Trägermaterial (z.B. Polyestervlies, Polyestergewebe oder Glasgewebe) und einem Reaktionsharz (bspw. epoxidierte Phenolnovolake, häufig mittels Dicyandiamin beschleunigt) in einem vorreagierten Stadium (B-Stage). Zur vollständigen Aushärtung müssen Bänder dieses Typs 2 Stunden bei ca. 165°C oder bis zu 12 Stunden bei nur 120°C ausgehärtet werden. Als Füllstoff wird heute üblicherweise Siliziumkarbid verwendet, wobei die mittlere Korngröße den resultierenden elektrischen Widerstand des Bandes bestimmt.

Halbleitende Lacke sind typischerweise lösemittelbasierte Systeme wie Phenolharze mit halbleitenden oder halbleitendfunktionalisierten Füllstoffen.

Bei Raumtemperatur ist dabei bis zur Erzielung einer Überstreichbarkeit eine Zeit von mehreren Stunden (bis zu 4 und mehr) erforderlich. Da häufig bis zu fünf Schichten übereinander hergestellt werden müssen, handelt es sich um einen zeitaufwändigen Prozess.

Die hohe Trocknungszeit folgt aus dem nötigen hohen Lösemittelgehalt (ca. bis 30%). Aufgrund von Umwelt- und Arbeitsschutzgesichtspunkten ist dies aber abzulehnen. Hier besteht auch die Gefahr der Initiierung einer versteckten Fehlstelle. Heutige Systeme sind zusätzlich auf niedrige Wärmebestandsklassen beschränkt.

Kommerziell werden nur für bestimmte Widerstandsbereiche fertig gemischte Lacke angeboten. Benötigt werden aber weitere Widerstandsbereiche, die durch eigenes Mischen von Hand hergestellt werden. Diese Mischungen haben aber bestimmte Nachteile, wie das Absinken/Entmischen des Füllstoffs, die Gefahr einer Fehlmischung, schlechtere Verarbeitungseigenschaften (z.B. Streichfähigkeit).

Dabei gab es bisher kaum befriedigende Ansätze zur Beschleunigung der Verarbeitung durch deutliche Reduzierungen der Aushärtezeiten. Die Aushärtezeiten sind der langsamste Schritt in dieser Fertigungsetappe und damit geschwindigkeitsbestimmend für die Fertigung.

Das Dokument WO 00/13191 A1 offenbart ein Glimmschutzband für elektrische Maschinen, insbesondere Hochspannungsmaschinen, erhältlich durch Imprägnieren eines gewebeartigen Trägermaterials mit einer Lösung eines Reaktionsharzes (Komponente A) in einem Lösemittel, die einen mit Antimon-dotiertem Zinnoxid beschichteten anorganischen Füllstoff sowie gegebenenfalls einen Härter und/oder Beschleuniger (Komponente B) enthält, und Entfernen des Lösemittels durch eine thermische Behandlung.

Das Dokument DE 30 45 462 A1 offenbart ein Abschirmverfahren zur Vermeidung von Koronaentladungen am Endabschnitt einer um eine Ständerwicklung einer elektrischen Maschine angeordneten Hauptisolierschicht, gekennzeichnet durch folgende Schritte: - Umwickeln der Hauptisolierschicht an dem Endabschnitt mit einem Abschirmgrundmaterial, - das ein Halbleitermaterial ist, und - Tränken des Abschirmgrundmaterials und wenigstens des Endabschnitts der Hauptisolierschicht, so dass beide zu einer Einheit fixiert werden.

Das Dokument DE 42 18 928 A1 offenbart eine Glimmschutzanordnung dadurch gekennzeichnet, dass das Glimmschutzband einen textilen Träger aus Glasgewebe aufweist, der mit einem halbleitenden Tränkmittel getränkt ist. Das Tränkmittel enthält Russ und/oder Graphit. Ein Teil der Glimmschutzanordnung besteht aus mit Siliziumcarbid gefülltem Epoxidharz.

Es ist daher Aufgabe der Erfindung, das Problem zu lösen.

Die Aufgabe wird gelöst durch einem Glimmschutz gemäß Anspruch 1, ein Verfahren gemäß Anspruch 18 und eine elektrische Maschine gemäß Anspruch 35.

In den jeweiligen Unteransprüchen sind weitere vorteilhafte Maßnahmen aufgelistet, die beliebig miteinander kombiniert werden können, um weitere Vorteile zu erzielen.

Es zeigen:
- Figur 1: ein Ende eines Generatorwicklungsstabs (Stand der Technik),
- Figur 2, 3: schematisch die Vorgehensweise bei der Aufbringung eines Glimmschutzes,
- Figur 4 - 6: verschiedene Ausführungsbeispiele der Erfindung,
- Figur 7: einen Generator.

Die Figuren und die Beschreibung stellen nur Ausführungsbeispiele der Erfindung dar.

Figur 1 zeigt ein Ende eines Generatorwicklungsstabs.

Ein solches Ende weist einen elektrischen Leiter 7 auf, um den eine innere Potentialsteuerung (IPS) 10 vorhanden ist. Darum befindet sich ein äußerer Glimmschutz (AGS) 13, an dessen Ende sich ein Endglimmschutz (EGS) 16 anfügt.

Das Bezugszeichen 4 kennzeichnet ein Ständerblechpaket, in dem der Leiter 7 angeordnet ist.

Gegebenenfalls ist eine Erdung 19 an dem Ende vorhanden.

Die Erfindung für den Glimmschutz besteht in chemischen Formulierungen, die als Lacke oder als Matrixmaterialen in Bandsystemen dienen.

Dieser Glimmschutz kann als Endglimmschutz 16 in rotierenden elektrischen Maschinen (Generatoren, Motoren, ...), Kabelendverschlüssen oder anderen Systemen verwendet werden, bei denen ein kontrolliert geführter Potenzialabbau aus konstruktiver Sicht notwendig ist.

Der Glimmschutz weist vorzugsweise eine Füllung auf, die aus einem halbleitenden Füllstoff besteht, der das System zur Verwendung als Endenglimmschutz befähigt.

Dies sind vorzugsweise Siliziumkarbid und/oder Graphit.

Dabei werden vorteilhafter Weise Füllungen von 30Gew.% bis 90Gew.% verwendet.

Bei dem Matrixmaterial für das härtbare Material handelt es sich vorzugsweise um Monomere, deren Vernetzung vorzugsweise durch einen oder mehrere Initiatoren geschieht, welche reaktive Spezies emittieren oder in einen angeregten Zustand übergehen, welche/r die Vernetzung starten/startet.

Die Aktivierung solcher Initiatoren erfolgt durch elektromagnetische Strahlung, welche beispielsweise im Spektralbereich der Infrarot-, Röntgen-, Ultraviolett- und/oder •- Strahlung liegen kann.

Zusätzlich können sekundäre Beschleuniger eingesetzt werden, die die Anregung der Initiatoren im Wellenlängenbereich variieren oder verstärken können.

In Figur 2 ist ein Substrat 40 gezeigt, auf dem eine solche härtbare Mischung, die dann für den Glimmschutz verwendet wird, in Form einer Schicht 70 aufgebracht wird.

Durch die Einwirkung von Strahlung, hier als Welle dargestellt, härtet die Schicht 70 aus und bildet die ausgehärtete Schicht 70'.

Vergleichbares ist in der Figur 3 dargestellt, bei dem durch eine Temperaturerhöhung (+T) die Härtung der Schicht 70 erfolgt.

Die Vorgehensweise gemäß Figur 2 und 3 kann kombiniert werden. Dies kann vorzugsweise eine homogene Mischung der Materialien von Figuren 2, 3 darstellen (nicht dargestellt).

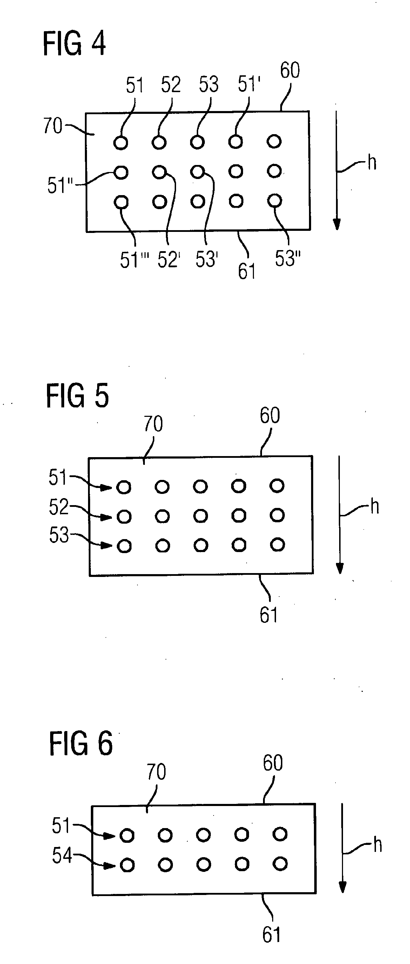

Figur 4 zeigt eine zu härtende Schicht 70 oder einen härtbaren Glimmschutz, bei dem in einer zu härtenden Matrix verschiedene Typen von Initiatoren 51, 52, 53, ... vorhanden sind. Die verschiedenen Typen von Initiatoren 51, 52, 53, ... sind vorzugsweise homogen in der Schicht 70 oder in dem Glimmschutz verteilt.

Bei der Bestrahlung kann ein breiter Wellenlängenbereich verwendet werden oder mehrere selektive Wellenlängen, die verschieden über die Tiefe h der Schicht 70 eindringen können. So können neben den Initiatoren 51", die von der Einstrahlungsfläche 60 weiter entfernt sind und ggf. nicht mehr oder weniger wirken als direkt an der Einstrahlungsfläche 60, auch im unteren Bereich nahe dem Boden 61 mit Typen von Initiatoren 53" vorhanden sein, wo eine Wellenlänge (bzw. Wellenlängenbereich) tiefer bis zum Boden 61 eindringen kann und besonders wirksam ist für die Initiatoren 53".

In Figur 5 sind im Gegensatz zu Figur 4 die verschiedenen Typen von Initiatoren 51, 52, 53 nicht homogen verteilt, sondern über die Tiefe h selektiv in der Schicht 70 angeordnet. Die verschiedenen Typen von Initiatoren 51, 52, 53, ... sind vorzugsweise in ihrer Wirkung wellenlängenabhängig. Im oberen Bereich nahe der Einstrahlungsfläche 60 sind die Typen von Initiatoren 51 angeordnet, bei denen eine Wellenlänge bis zu diesem Bereich gut eindringen kann:

In einem zweiten oder mittleren Bereich der Schicht 10 sind Typen von Initiatoren 52 vorhanden, bei dem an eine weitere bzw. zweite Wellenlänge (Wellenlängenbereich) bis in den mittleren Bereich der Schicht 70 eindringen kann und im unteren Bereich der Schicht 70 sind nur noch Initiatoren 53 vorhanden, bei dem eine weitere bzw. dritte Wellenlänge bis zum Boden 61 gut durchdringen kann.

Ebenso kann nahe dem Boden 61 oder dem Bereich weiter entfernt von den Einstrahlungsfläche 60 die Konzentration eines oder mehrerer Initiatoren erhöht sein, um die geringere Intensivität der Strahlung auszugleichen (Konzentrationsgradient (nicht dargestellt)).

Figur 6 zeigt ein weiteres Ausführungsbeispiel der Erfindung. Hier sind in der Schicht 70 über die Höhe h ebenfalls selektiv verschiedene Typen von Initiatoren 51, 54 vorhanden, hier vorzugsweise in zwei Bereiche von der Schicht 70 verteilt. Jedoch reagieren die Typen von Initiatoren 51 auf elektromagnetische Strahlung und im tieferen Bereich der Schicht 70, wo Strahlen schlechter eindringen können, sind Initiatoren 54 vorhanden, die auf Wärme reagieren (inhomogene Kombination von Fig. 2, 3).

Ein gradueller Übergang der Konzentration der Typen von Initiatoren ist vorzugsweise denkbar.

Die Erwärmung unterer Schichtbereiche ist einfach zu bewerkstelligen im Gegensatz von Einbringung von elektromagnetischer Strahlung im Tiefenbereich eines massiven Materials, da immer eine Absorption in einem massiven Material von elektromagnetischer Strahlung stattfindet.

Der Glimmschutz weist eine Füllung (Fig. 2 - 6) auf, die aus einem halbleitenden Füllstoff besteht, der das System zur Verwendung als Endenglimmschutz befähigt.

Bei dem Matrixmaterial für das härtbare Material handelt es sich um Monomere, deren Vernetzung vorzugsweise durch einen oder mehrere Initiatoren geschieht, welche reaktive Spezies emittieren oder in einen angeregten Zustand übergehen, welche/r die Vernetzung starten/startet.

Die Aktivierung solcher Initiatoren erfolgt durch elektromagnetische Strahlung, welche beispielsweise im Spektralbereich der Infrarot-, Röntgen-, Ultraviolett- und/oder •- Strahlung liegen kann.

Zusätzlich können sekundäre Beschleuniger eingesetzt werden, die die Anregung der Initiatoren im Wellenlängenbereich variieren oder verstärken können.

Bei der Initiation mit Hilfe ultravioletter Strahlung kann die Aktivierung beispielsweise über einen radikalischen oder einen kationischen Vernetzungsmechanismus erfolgen. Die Aktivierung solcher Initiatoren ist begrenzt auf die entsprechend gewählte Beschleunigerart und erfolgt ausschließlich durch elektromagnetische Strahlung.

Denkbar ist auch die Anwendung einer "Dual Cure"-Option, also die Beimischung eines weiteren Initiators, welcher eine Vernetzung durch Applikation von Temperatur erlaubt und somit für besondere Anwendungsfälle eine Wahl der Aktivierungsweise erlaubt.

Die durch elektromagnetische Strahlung zu aktivierenden Beschleuniger werden so gewählt, dass eine Durchstrahlung und Aktivierung der Beschleuniger in der Tiefe möglich ist. Üblicherweise werden hier im ultravioletten Spektralbereich reaktive Systeme gewählt. Diese sind meist sehr klar von thermisch härtenden Systemen abgrenzbar, da übliche Photoinitiatoren nur auf einstrahlendes Licht reagieren. Dabei wird die Konzentration des reaktivsten Beschleunigers entsprechend gering sein, so dass die einfallende Strahlung nicht gleich an der Oberfläche vollständig absorbiert wird.

Entsprechend kann eine Kombination aus mehreren Initiatoren geschaffen werden, die eine Tiefendurchstrahlung und Tiefenaushärtung so ermöglichen. Damit ist eine Aushärtung von relativ dicken Schichten von bis zu einem Millimeter möglich. Ein derartig katalysiertes System kann in gefüllter Form in einer üblichen Lackschichtdicke von bis zu 0,5mm ebenfalls initiiert und gehärtet werden, da die Formulierung der Initiatoren bewirkt, dass eine Aushärtung der Matrix auch im Schattenbereich der Füllstoffpartikel fortgeführt wird.

Hat man beispielsweise in einer strahlenhärtenden chemischen Formulierung ein Prozent Initiator enthalten, muss man auch schon bei leicht gefüllten Systemen Initiatoren mit hoher Effizienz, d.h. hoher Photonenausbeute wählen.

Bei dem kationischen Photoinitiator Bis-[4(diphenylsulfonium)phenyl]sulfid-bis-hexafluoroantimonat ist das Verhältnis von eingestrahlten Phononen zur Entstehung reaktiver Teilchen beinahe gleich eins. Dies hat zur Folge, dass die Oberfläche mit hoher Geschwindigkeit aushärtet und der Initiator nahezu schon an der Oberfläche alle Phononen abfängt/absorbiert.

Die Formulierung kann aber auch derart gestaltet werden, dass statt einem Initiator mehrere in Kombination eingesetzt werden. Dabei ist eine prozentuale Erhöhung am Gesamtgehalt des Initiators nicht zwingend notwendig. Die Initiatoren werden dabei so gewählt, dass jeder einen bestimmten Wellenlängenabschnitt des UV-Lichts absorbiert.

Zum Beispiel absorbiert der Photoinitiator 2,4,6-Trimethylbenzoyldiphenylphosphinoxid (TPO) Strahlung im UV-A Bereich stark mit einem Maximum bei -370 nm, für Strahlung mit geringerer Wellenlänge ist er durchlässig. Der Photoinitiator Methyl-o-benzoylbenzoat (MOBB) absorbiert im kürzerwelligen UV-Bereich.

Mittels eines Synergists kann die Anregung bei dazwischen liegenden Wellenzahlen ebenfalls forciert werden, so dass für die Härtung beinahe das gesamte UV-Spektrum effektiv genutzt werden kann. Dadurch können dann auch stark gefüllte Materialien durchgehärtet werden.

Die Aushärtung kann dabei zum Beispiel durch einen F-Strahler oder G-Strahler oder durch Hintereinanderschaltung beider Strahler initiiert werden.

Die Aushärtung hochgefüllter Materialien wurde noch nie unter Verwendung elektromagnetischer Strahlung befriedigend erreicht. Daher gab es bisher auch nie die Möglichkeit der Realisierung eines derartig schnellhärtenden Lacks, der gleichzeitig hochgradig mit einem teilleitfähig funktionalisierten Füllstoff versehen ist und somit Anwendung als Endenglimmschutz finden kann.

Durch Kombination eines entsprechend tiefenreaktiven UV-Harzes mit dem funktionalisierten Füllstoff kann dies nunmehr erreicht werden.

Bei einem solchen System ist die geschickte Kombination von Photoinitiatoren sehr wichtig. Um das Wellenlängenspektrum optimal nutzen zu können, werden verschiedene Photoinitiatoren miteinander kombiniert. Diese reagieren auf unterschiedliche Anregungswellenlängen und ermöglichen den teilweisen Durchlass der Strahlung bis in die Tiefe des Systems. Selbst wenn ein Füllstoff große Teile der Strahlung abfängt, kann so immer noch eine Durchhärtung in der Tiefe erreicht werden. So werden letztendlich eine gute Härte und auch Haftung erzielt. Durch Zugabe weiterer Komponenten, sog. Additive, können spezielle Eigenschaften wie Flexibilität und Haftung eingestellt werden.

Während 2,4,6-Trimethylbenzoyldiphenylphosphinoxid (TPO) einen radikalischen Aushärtemechanismus initiiert, sind grundsätzlich auch Formulierungen denkbar, welche über einen kationischen Reaktionsmechanismus gestartet werden. Damit lassen sich auch übliche Epoxidharze formulieren und so gut vernetzte Schichtsysteme erzielen.

Durch Addition von Phosphorverbindungen kann zusätzlich die Selbstverlöschung im Brandfall reduziert werden.

Beispiele für einen thermischen und einen photosensiblen Initiator sind (Bis-[4(diphenylsulfonium)phenyl]sulfid-bis-hexafluoroantimonat), welche für "Dual Cure"-Anwendungen auch mischbar sind, ist in Anspruch 4 ein ebenfalls nur beispielhaftes Portfolio an Matrixmolekülen aufgezeigt. Daraus lässt sich erkennen, dass strahlenhärtende Systeme in der Wahl nicht nur ihrer Initiatoren, Synergielisten, Stabilisatoren und weiterer Additive, sondern auch in der Wahl der eigentlichen Reaktionsharzmatrix völlig frei sind und sich hiermit eine sehr gute Möglichkeit bietet, Formulierungen mit bestimmten Eigenschaften zu erarbeiten.

Die nutzbaren Systeme decken dabei beinahe jede denkbare großtechnisch verfügbare Gruppe an chemisch vernetzbaren Molekülen ab.

Die offensichtlichen Vorteile der neuen Formulierung sind:
▪ Durch die Aushärtung mittels Strahlung kann die Zeit bis zur nächsten Überstreichung auf ca. 180 Sekunden reduziert werden, wohingegen herkömmliche in Verwendung befindliche Systeme ca. 4 Stunden Härtezeit pro Anstrichlage benötigen. D.h. der Aufwand bis zur Fertigstellung des Endenglimmschutz', bspw. eines Generatorstabes, wird von mehreren Tagen und Verteilung auf mehrere Betriebsarbeitsschichten auf wenige Minuten reduziert.
▪ Durch die einstellbare Viskosität kann der Lack sowohl sprüh- als auch streichfähig formuliert werden.
▪ Das System kann schwerentflammbar eingestellt werden und so UL-94 V-Q und weitere Brennbarkeitseinschränkungen und -normen erfüllen.
▪ Durch die Wahl eines urethanisierten Acrylats als Matrixmaterial kann beispielsweise die Temperaturbeständigkeit und somit die Wärmebestandsklasse (WBK) heraufgesetzt werden auf bis zu 180°C.
▪ Zusätzlich ergibt sich eine Verbesserung der Kratzfestigkeit.
▪ Es kann eine beinahe oder auch vollständige Lösemittelfreiheit erreicht werden.

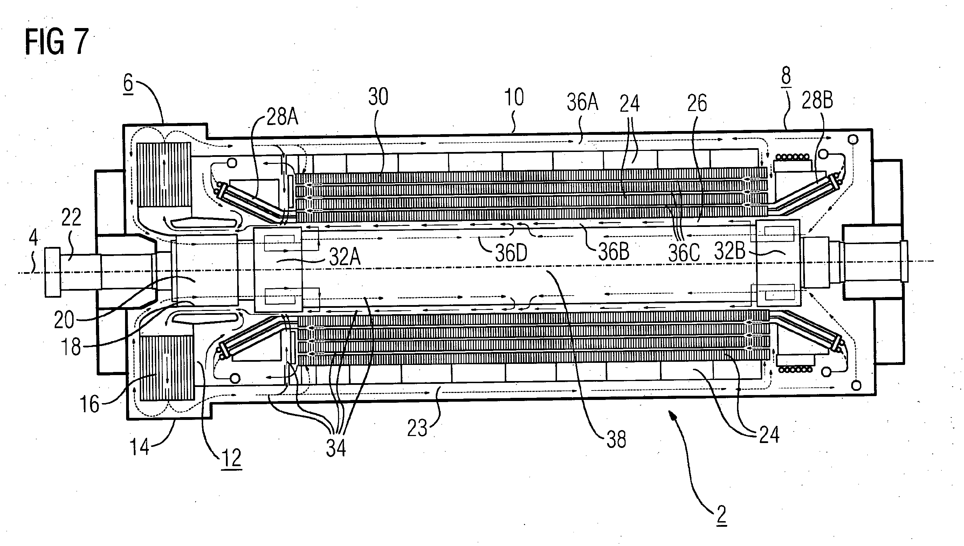

Gemäß Figur 7 erstreckt sich eine Rotationsmaschinenanordnung, insbesondere eine Generatoranordnung 2 entlang einer Längsachse 4 von einem turbinenseitigen Endbereich 6 zu einem erregerseitigen Endbereich 8. Die Generatoranordnung 2 weist ein Gehäuse 10 auf. Im turbinenseitigen Endbereich 6 ist eine Kühlvorrichtung 12 angeordnet. Und zwar sind in einem Kühlerkopf 14, der ein Teil des Gehäuses 10 ist, zwei Kühler 16 und ein Verdichter in Form eines Gebläses 18 mit einer Gebläsenabe 20 angeordnet. Die Gebläsenabe 20 sitzt auf einem Läufer 22, der sich entlang der Längsachse 4 durch die Generatoranordnung 2 erstreckt. Im Anschluss an die Kühlvorrichtung 12 in Richtung der Längsachse 4 ist der eigentliche Generatorbereich 23 angeordnet. In diesem Bereich ist der Läufer 22 von einem Ständer 24 unter Bildung eines Luftspalts 26 umgeben. Der Ständer 24 weist eine Ständerwicklung mit einem turbinenseitigen Ständerwickelkopf 28A und mit einem erregerseitigen Ständerwickelkopf 28B auf. Zwischen den beiden Ständerwickelköpfen 28A, 28B ist ein sogenanntes Blechpaket 30 angeordnet. Analog zum Ständer 24 weist der Läufer 22 einen turbinenseitigen Läuferwickelkopf 32A und einen erregerseitigen Läuferwickelkopf 32B auf.

Aufgrund der bei Turbogeneratoren üblichen hohen Leistungsdichte ist eine Kühlung der Generatoranordnung 2 im Generatorbereich 23 notwendig. Einen besonders hohen Kühlbedarf haben hierbei die Ständerwickelköpfe 28A, 28B, sowie die Läuferwickelköpfe 32A, 32B. Zur Kühlung des Generatorbereichs 23 weist dieser ein Kühlsystem 34 auf, welches von der Kühlvorrichtung 12 mit Kühlgas versorgt wird. Das Kühlsystem 34 hat eine Anzahl von Kühlgaskanälen 36A-_D,_48, über die das Kühlgas in einem Kreislauf geführt wird. Ein erster Kühlgaskanal 36A erstreckt sich hierbei in axialer Richtung und ist zwischen dem Ständer 24 und dem Gehäuse 10 angeordnet. Ein zweiter Kühlgaskanal 36B ist vom Luftspalt 26 gebildet. Weitere sich in axialer Richtung erstreckende Kühlgaskanäle 36C führen durch das Blechpaket 30. Zur Kühlung des Läufers 22 führt durch diesen ein Kühlgaskanal 36D. Die Kühlgasströmung im Generatorbereich 23 sowie in der Kühlvorrichtung 12 ist jeweils durch Pfeile angedeutet, wobei die gestrichelten Pfeile den Strömungsweg des kalten Kühlgases und die durchgezogenen Pfeile den Strömungsweg des erwärmten Kühlgases (Warmgas) angeben.

Zur Kühlung der Ständerwickelköpfe 28A, 28B teilt sich der von den Kühlern 16 kommende Kühlgas- Strom im turbinenseitigen Endbereich 6 auf. Der eine Teilstrom dient zur Kühlung des turbinenseitigen Ständerwickelkopfs 28A und der andere Teilstrom wird über den Kühlgaskanal 36A zum erregerseitigen Ständerwickelkopf 28B weitergeleitet und nochmals aufgeteilt. Der eine Teil dient zur Kühlung des Ständerwickelkopfs 28B und strömt von dort als Warmgas über den Luftspalt 26 wieder zurück. Der andere Teil wird durch die Kühlgaskanäle 36C des Blechpakets 30 geleitet und tritt im turbinenseitigen Endbereich 6 als Warmgas aus und wird den Kühlern 16 zugeführt. Zur Kühlung der Läuferwickelköpfe 32A, 32B wird Kühlgas in den Kühlgaskanal 36D des Läufers 22 sowohl vom turbinenseitigen Endbereich 6 als auch vom erregerseitigen Endbereich 8 eingeleitet. Ein Teilstrom des Kühlgases durchströmt die jeweiligen Läuferwickelköpfe 32A, 32B und wird anschließend in den Luftspalt 26 als Warmgas geleitet und den Kühlern 16 zugeführt. Der verbleibende Teilstrom wird im Kühlgaskanal 36D weiter durch den Läufer 22 hindurchgeführt, und zwar derart, dass das Kühlgas von den beiden Läuferwickelköpfen 32A, 32B aufeinander zuströmt und etwa im Mittenbereich 38 des Generatörbereichs 23 in den Luftspalt 26 geleitet wird.

## Patentansprüche

1. Glimmschutz (1) für elektrische Maschinen (2), der zumindest durch UV-Strahlung, gehärtet ist.

2. Glimmschutz nach Anspruch 1, der einen elektrisch halbleitenden Füllstoff aufweist.

3. Glimmschutz nach Anspruch 2, bei dem der elektrisch halbleitende Füllstoff Siliziumkarbid und/oder Graphit aufweist.

4. Glimmschutz nach einem oder beiden der Ansprüche 2 oder 3, dessen Anteil am halbleitenden Füllstoff 30Gew.% bis 90Gew.%, insbesondere von 50Gew.% bis 90Gew.%, ganz insbesondere 60Gew.% bis 85Gew.% beträgt.

5. Glimmschutz nach einem oder mehreren der Ansprüche 1, 2, 3 oder 4, der durch Wärme gehärtet ist.

6. Glimmschutz nach einem oder mehreren der Ansprüche,
der als härtbares Material mittels elektromagnetischer Strahlung
Bisphenol-A-Diglycidylether (BADGE),
Bisphenol-F-Diglycidylether (BFDGE),
3,4-Epoxycytohexylmethyl-3',4'-epoxy-cyclohexancarboxylat, Phenolnovalak,
Acrylat,
Urethan und/oder
Endether aufweist.

7. Glimmschutz nach einem oder mehreren der Ansprüche 1 bis 6,
der zur Vernetzung einen oder mehrere Initiatoren aufweist,
insbesondere dass das härtbare Material Monomere aufweist.

8. Glimmschutz nach einem oder beiden der vorherigen Ansprüche 5 oder 7,
bei dem der Initiator durch Temperaturerhöhung eine Vernetzung bewirken kann.

9. Glimmschutz nach einem oder mehreren der Ansprüche 1 bis 8,
der sekundäre Beschleuniger aufweist,
die die Anregung der Initiatoren im Wellenlängenbereich variieren,
insbesondere verstärken können.

10. Glimmschutz nach einem oder mehreren der Ansprüche 1 bis 9,
der zur Vernetzung des härtbaren Materials radikalische oder kationische Vernetzungsmechanismen aufweist.

11. Glimmschutz nach einem oder mehreren der vorherigen Ansprüche,
der zumindest zwei verschiedene Typen (51, 54) von Initiatoren aufweist,
bei dem zumindest einer durch Wärme und
der andere durch elektromagnetische Strahlung eine Vernetzung bewirkbar ist.

12. Glimmschutz nach einem oder mehreren der Ansprüche 7 bis 13,
der mehrere verschiedene Initiatoren (51, 52, 53, ...) aufweist,
die aktivierbar,
insbesondere wellenlängenspezifisch aktivierbar sind.

13. Glimmschutz nach einem oder mehreren der Ansprüche 7 bis 12,
der als Initiator bis-[4(diphenylsulfonium)phenyl]sulfid-bis-hexafluoroantimonat aufweist.

14. Glimmschutz nach einem oder mehreren der Ansprüche 7 bis 13,
der als Initiator 2,4,6-Trimethylbenzoyldiphenylphosphinoxid aufweist.

15. Glimmschutz nach einem oder mehreren der vorherigen Ansprüche,
bei dem das aufgetragene, gehärtete Material über seine Dicke Initiatoren aufweist,
wobei die Initiatoren (51, 52, 53, 54, ...) entlang der Dicke variieren,
insbesondere aufgrund ihrer wellenlängenspezifischen Aktivierung,
ganz insbesondere durch Variationen der Zusammensetzung der Initiatoren (51, 52, 53, 54, ...) oder
der Konzentration des oder der Initiatoren (51, 52, 53, 54, ...).

16. Glimmschutz nach einem oder mehreren der vorherigen Ansprüche,
bei dem das aufgetragene gehärtete Material über sein Dicke verschiedene Zusammensetzungen des gehärtete Materials und/oder des Initiators aufweist.

17. Glimmschutz nach einem oder mehreren der vorherigen Ansprüche,
bei dem die Konzentration eines Initiators (51, 52, 53, ...) im Bereich einer Einstrahlungsfläche (60) eine geringere Konzentration aufweist als am Boden (61).

18. Verfahren zur Herstellung eines Glimmschutzes (1) für elektrische Maschinen (2),
der zumindest durch elektromagnetische Strahlung, insbesondere durch UV-Strahlung,
gehärtet wird.

19. Verfahren nach Anspruch 18,
bei dem ein elektrisch halbleitender Füllstoff verwendet wird.

20. Verfahren nach Anspruch 19,
bei dem als elektrisch halbleitender Füllstoff Siliziumkarbid oder Graphit verwendet wird.

21. Verfahren nach einem oder beiden der Ansprüche 19 oder 20,
bei dem ein Anteil von halbleitenden Füllstoff 30Gew.% bis 90Gew.%,
insbesondere von 50Gew.% bis 90Gew.%,
ganz insbesondere 60Gew.% bis 85Gew.% verwendet wird.

22. Verfahren nach einem oder mehreren der Ansprüche 18, 19, 20 oder 21,
der durch Wärme gehärtet wird.

23. Verfahren nach einem oder mehreren der Ansprüche,
bei dem als härtbares Material mittels elektromagnetischer Strahlung
Bisphenol-A-Diglycidylether (BADGE),
Bisphenol-F-Diglycidylether (BFDGE),
3,4-Epoxycytohexylmethyl-3',4'-epoxy-cyclohexancarboxylat, Phenolnovalak,
Acrylat,
Urethan und/oder
Endether verwendet wird.

24. Verfahren nach einem oder mehreren der Ansprüche 18 bis 23,
dessen Vernetzung durch einen oder mehrere Initiatoren erfolgt,
insbesondere dass als härtbares Material Monomere verwendet werden.

25. Verfahren nach einem oder beiden der vorherigen Ansprüche 22 oder 24,
bei dem der Initiator durch Temperaturerhöhung eine Vernetzung bewirkt.

26. Verfahren nach einem oder mehreren der Ansprüche 18 bis 25,
bei dem sekundäre Beschleuniger verwendet werden,
die die Anregung der Initiatoren im Wellenlängenbereich variieren,
insbesondere verstärken.

27. Verfahren nach einem oder mehreren der Ansprüche 18 bis 26,
bei dem die Vernetzung des härtbaren Materials durch radikalische oder kationische Vernetzungsmechanismen erfolgt.

28. Verfahren nach einem oder mehreren der vorherigen Ansprüche 18 bis 27,
bei dem zumindest zwei verschiedene Typen (51, 54) von Initiatoren verwendet werden,
bei dem zumindest einer durch Wärme und
der andere durch elektromagnetische Strahlung eine Vernetzung bewirkt.

29. Verfahren nach einem oder mehreren der Ansprüche 24 bis 28,
bei dem mehrere verschiedene Initiatoren (51, 52, 53, ...) verwendet werden,
die aktiviert,
insbesondere wellenlängenspezifisch aktiviert werden.

30. Verfahren nach einem oder mehreren der Ansprüche 24 bis 29,
bei dem als Initiator bis-[4(diphenylsulfonium)phenyl]sulfid-bis-hexafluoroantimonat verwendet wird.

31. Verfahren nach einem oder mehreren der Ansprüche 24 bis 30,
bei dem als Initiator 2,4,6-Trimethylbenzoyldiphenylphosphinoxid verwendet wird.

32. Verfahren nach einem oder mehreren der vorherigen Ansprüche 18 bis 31,
bei dem die Initiatoren (51, 52, 53, 54, ...) entlang der Dicke des aufzutragenden und zu härtenden Materials variiert werden,
insbesondere aufgrund ihrer wellenlängenspezifischen Aktivierung,
ganz insbesondere durch Variationen der Zusammensetzung der Initiatoren (51, 52, 53, 54, ...) oder
der Konzentration des oder der Initiatoren (51, 52, 53, 54, ...).

33. Verfahren nach einem oder mehreren der vorherigen Ansprüche 18 bis 32,
bei dem im aufgetragenen und zu härtenden Material über seine Dicke die Zusammensetzungen des zu härtende Materials und/oder des Initiators variiert werden.

34. Verfahren nach einem oder mehreren der vorherigen Ansprüche 18 bis 33,
bei dem die Konzentration eines Initiators (51, 52, 53, ...) im Bereich einer Einstrahlungsfläche (60) geringer Konzentration eingestellt wird als am Boden (61).

35. Elektrische Maschine,
insbesondere Generator,
der als Glimmschutz (1),
insbesondere als Endglimmschutz,
einen Glimmschutz nach einem oder mehreren der Ansprüche 1 bis 17 aufweist oder einen Glimmschutz hergestellt nach einem oder mehreren der Ansprüche 18 bis 34.

## Claims

1. Corona shield (1) for electric machines (2),
which is cured at least by UV radiation.

2. Corona shield according to Claim 1,
which comprises an electrically semiconducting filler.

3. Corona shield according to Claim 2,
wherein the electrically semiconducting filler comprises silicon carbide and/or graphite.

4. Corona shield according to one or both of Claims 2 and 3, whose proportion of semiconducting filler is 30% by weight to 90% by weight,
in particular from 50% by weight to 90% by weight,
very particularly 60% by weight to 85% by weight.

5. Corona shield according to one or more of Claims 1, 2, 3 and 4,
which is cured by heat.

6. Corona shield according to one or more of the claims, which comprises as curable material by means of electromagnetic radiation
bisphenol A diglycidyl ether (BADGE),
bisphenol F diglycidyl ether (BFDGE),
3,4-epoxycyclohexylmethyl-3',4'-epoxy-cyclohexane carboxylate,
phenol novolak,
acrylate,
urethane and/or
end ether.

7. Corona shield according to one or more of Claims 1 to 6, which comprises one or more initiators for crosslinking purposes,
in particular that the curable material comprises monomers.

8. Corona shield according to one or both of the preceding Claims 5 and 7,
wherein the initiator can bring about a crosslinking as a result of a temperature increase.

9. Corona shield according to one or more of Claims 1 to 8, which comprises secondary accelerators,
which vary the excitation of the initiators in the wavelength range,
in particular can amplify said excitation.

10. Corona shield according to one or more of Claims 1 to 9, which comprises free radical or cationic crosslinking mechanisms for the crosslinking of the curable material.

11. Corona shield according to one or more of the preceding claims,
which comprises at least two different types (51, 54) of initiators,
wherein at least one can bring about a crosslinking by means of heat and
the other can bring about a crosslinking by means of electromagnetic radiation.

12. Corona shield according to one or more of Claims 7 to 13, which comprises a plurality of different initiators (51, 52, 53, ...),
which are activatable, in particular activatable in a wavelength-specific manner.

13. Corona shield according to one or more of Claims 7 to 12, which comprises bis[4(diphenylsulphonium)phenyl] sulphide bishexafluoroantimonate as initiator.

14. Corona shield according to one or more of Claims 7 to 13, which comprises 2,4,6-trimethylbenzoyldiphenylphosphine oxide as initiator.

15. Corona shield according to one or more of the preceding claims,
wherein the applied, cured material comprises initiators over its thickness,
wherein the initiators (51, 52, 53, 54, ...) vary along the thickness,
in particular on account of their wavelength-specific activation,
very particularly as a result of variations of the composition of the initiators (51, 52, 53, 54, ...) or
of the concentration of the initiator or initiators (51, 52, 53, 54, ...).

16. Corona shield according to one or more of the preceding claims,
wherein the applied, cured material comprises different compositions of the cured material and/or of the initiator over its thickness.

17. Corona shield according to one or more of the preceding claims,
wherein the concentration of an initiator (51, 52, 53, ...) in the region of an irradiation surface (60) has a lower concentration than at the base (61).

18. Method for producing a corona shield (1) for electric machines (2),
which is cured at least by electromagnetic radiation,
in particular by UV radiation.

19. Method according to Claim 18,
wherein an electrically semiconducting filler is used.

20. Method according to Claim 19,
wherein silicon carbide or graphite is used as the electrically semiconducting filler.

21. Method according to either or both of Claims 19 and 20, wherein a proportion of semiconducting filler 30% by weight to 90% by weight,
in particular from 50% by weight to 90% by weight,
very particularly 60% by weight to 85% by weight is used.

22. Method according to one or more of Claims 18, 19, 20 and 21,
wherein the corona shield is cured by heat.

23. Method according to one or more of the claims,
wherein as curable material by means of electromagnetic radiation
bisphenol A diglycidyl ether (BADGE),
bisphenol F diglycidyl ether (BFDGE),
3,4-epoxycyclohexylmethyl-3',4'-epoxy-cyclohexane carboxylate, phenol novolak,
acrylate,
urethane and/or
end ether is used.

24. Method according to one or more of Claims 18 to 23, wherein the crosslinking is effected by one or a plurality of initiators,
in particular that monomers are used as curable material.

25. Method according to either or both of the preceding Claims 22 and 24,
wherein the initiator brings about a crosslinking as a result of a temperature increase.

26. Method according to one or more of Claims 18 to 25, wherein secondary accelerators are used,
which vary the excitation of the initiators in the wavelength range, in particular amplify said excitation.

27. Method according to one or more of Claims 18 to 26, wherein the crosslinking of the curable material is effected by free radical or cationic crosslinking mechanisms.

28. Method according to one or more of the preceding Claims 18 to 27,
wherein at least two different types (51, 54) of initiators are used,
wherein at least one brings about a crosslinking by means of heat and
the other brings about a crosslinking by means of electromagnetic radiation.

29. Method according to one or more of Claims 24 to 28, wherein a plurality of different initiators (51, 52, 53, ...) are used,
which are activated,
in particular activated in a wavelength-specific manner.

30. Method according to one or more of Claims 24 to 29, wherein bis[4(diphenylsulphonium)phenyl] sulphide bishexafluoroantimonate is used as initiator.

31. Method according to one or more of Claims 24 to 30,
wherein 2,4,6-trimethylbenzoyldiphenylphosphine oxide is used as initiator.

32. Method according to one or more of the preceding Claims 18 to 31,
wherein the initiators (51, 52, 53, 54, ...) are varied along the thickness of the material to be applied and to be cured,
in particular on account of their wavelength-specific activation,
very particularly as a result of variations of the composition of the initiators (51, 52, 53, 54, ...) or
of the concentration of the initiator or initiators (51, 52, 53, 54, ...).

33. Method according to one or more of the preceding Claims 18 to 32,
wherein the compositions of the material to be cured and/or of the initiator are varied in the applied material to be cured over its thickness.

34. Method according to one or more of the preceding Claims 18 to 33,
wherein the concentration of an initiator (51, 52, 53, ...) in the region of an irradiation surface (60) is set to be lower in concentration than at the base (61).

35. Electric machine,
in particular a generator,
which comprises as a corona shield (1),
in particular as an overhang corona shield,
a corona shield according to one or more of Claims 1 to 17 or a corona shield produced according to one or more of Claims 18 to 34.

## Revendications

1. Protection ( 1 ) anti-effluves pour des machines ( 2 ) électriques,
qui est durcie au moins par du rayonnement UV.

2. Protection ( 1 ) anti-effluves suivant la revendication 1,
qui a une charge semi-conductrice du point de vue électrique.

3. Protection ( 1 ) anti-effluves suivant la revendication 2,
dans laquelle la charge semi-conductrice du point de vue électrique comprend du carbure de silicium et/ou du graphique.

4. Protection ( 1 ) anti-effluves suivant l'une ou les deux des revendications 2 ou 3,
dont la proportion de charge semi-conductrice représente de 30 % en poids à 90 % en poids,
notamment de 50 % en poids à 90 % en poids,
d'une manière tout à fait particulière de 60 % en poids à 85
% en poids.

5. Protection ( 1 ) anti-effluves suivant l'une ou plusieurs des revendications 1, 2 3 ou 4,
qui est durcie par la chaleur.

6. Protection ( 1 ) anti-effluves suivant l'une ou plusieurs des revendications,
qui a, comme matière durcissable au moyen d'un rayonnement électromagnétique,
de l'oxyde diglycidylique du bisphénol A ( BADGE ),
de l'oxyde diglycidylique du bisphénol F ( BFDGE ),
du 3'4' époxy-cyclohexanecarboxylate de 3,4 époxycyclohexylméthyle, du phénolnovalaque,
de l'acrylate,
de l'uréthane et/ou
de l'étheroxyde final.

7. Protection ( 1 ) anti-effluves suivant l'une ou plusieurs des revendications 1 à 6,
qui a, pour la réticulation un ou plusieurs amorceurs,
notamment en ce que la matière durcissable comprend des monomères.

8. Protection ( 1 ) anti-effluves suivant l'une ou les deux des revendications précédentes 5 ou 7,
dans laquelle l'amorceur peut provoquer une réticulation par élévation de la température.

9. Protection ( 1 ) anti-effluves suivant l'une ou plusieurs des revendications 1 à 8,
qui comportent des accélérateurs secondaires,
qui font varier l'excitation des amorceurs dans la plage des longueurs d'onde,
en pouvant notamment l'amplifier.

10. Protection ( 1 ) anti-effluves suivant l'une ou plusieurs des revendications 1 à 9,
qui comprend, pour la réticulation de la matière durcissable des mécanismes de réticulation radicalaires ou cationiques.

11. Protection ( 1 ) anti-effluves suivant l'une ou plusieurs des revendications,
qui a au moins deux types ( 51, 54 ) différents d'amorceur, dans laquelle au moins l'un peut rendre efficace une réticulation par la chaleur et
l'autre par du rayonnement électromagnétique.

12. Protection ( 1 ) anti-effluves suivant l'une ou plusieurs des revendications 7 à 13,
qui comprend plusieurs amorceurs ( 51, 52, 53, ... ) différents,
qui peuvent être activés,
en pouvant notamment être activés d'une manière spécifique en longueur d'onde.

13. Protection ( 1 ) anti-effluves suivant l'une ou plusieurs des revendications 7 à 12,
qui a comme amorceur du bis-hexafluoroantimonate sulfure de bis [4 ( diphénysulfonium ) phényle].

14. Protection ( 1 ) anti-effluves suivant l'une ou plusieurs des revendications 7 à 13,
qui a comme amorceur du diphénylphosphinoxyde de 2,4,6, triméthylbenzoyle.

15. Protection ( 1 ) anti-effluves suivant l'une ou plusieurs des revendications précédentes,
dans laquelle la matière durcie, enduite a, sur son épaisseur, des amorceurs,
les amorceurs ( 51, 52, 53, 54, ... ) variant suivant l'épaisseur,
notamment en raison de leur activation spécifique en longueur d'onde,
d'une manière tout à fait particulière par des variations de la composition des amorceurs ( 51, 52, 53, 54, ... ) ou
de la concentration du ou des amorceurs ( 51, 52, 53, 54, ... ) .

16. Protection ( 1 ) anti-effluves suivant l'une ou plusieurs des revendications précédentes,
dans laquelle la matière durcie, enduite a des compositions de la matière durcie et/ou de l'amorceur, qui diffèrent sur son épaisseur.

17. Protection ( 1 ) anti-effluves suivant l'une ou plusieurs des revendications précédentes,
dans laquelle la concentration d'un amorceur ( 51, 52, 53, 54, ... ) dans la partie d'une surface ( 60 ) d'incidence est plus petite qu'au fond ( 61 ).

18. Procédé de production d'une protection ( 1 ) anti-effluves pour des machines ( 2 ) électriques,
qui est durcie au moins par du rayonnement électromagnétique, notamment par du rayonnement UV.

19. Procédé suivant la revendication 18,
dans lequel on utilise une charge semi-conductrice du point de vue électrique.

20. Procédé suivant la revendication 19,
dans lequel on utilise comme charge semi-conductrice du point de vue électrique du carbure de silicium ou du graphite.

21. Procédé suivant l'une ou les deux des revendications 19 ou 20,
dans lequel on utilise une proportion de charge semi-conductrice de 30 % en poids à 90 % en poids,
notamment de 50 % en poids à 90 % en poids,
d'une manière tout à fait particulière de 60 % en poids à 95
% en poids.

22. Procédé suivant l'une ou plusieurs des revendications 18, 19, 20 ou 21,
dans lequel on effectue le durcissement par la chaleur.

23. Procédé suivant l'une ou plusieurs des revendications précédentes,
dans lequel on utilise comme matière durcissable au moyen d'un rayonnement électromagnétique,
de l'oxyde diglycidylique du bisphénol A ( BADGE ),
de l'oxyde diglycidylique du bisphénol F ( BFDGE ),
du 3'4' époxy-cyclohexanecarboxylate de 3,4 époxycyclohexylméthyle, du phénolnovalaque,
de l'acrylate,
de l'uréthane et/ou
de l'étheroxyde final.

24. Procédé suivant l'une ou plusieurs des revendications 18 à 23,
dont la réticulation s'effectue par un ou par plusieurs amorceurs,
notamment par le fait que l'on utilise des monomères comme matière durcissable.

25. Procédé suivant l'une ou les deux des revendications précédentes 22 ou 24,
dans lequel l'amorceur provoque une réticulation par élévation de la température.

26. Procédé suivant l'une ou plusieurs des revendications 18 à 25,
dans lequel on utilise des accélérateurs secondaires,
qui font varier l'excitation des amorceurs dans la plage des longueurs d'onde,
notamment en l'amplifiant.

27. Procédé suivant l'une ou plusieurs des revendications 18 à 26,
dans lequel on effectue la réticulation de la matière durcissable par des mécanismes de réticulation radicalaire ou cationique.

28. Procédé suivant l'une ou plusieurs des revendications précédentes 18 à 27,
dans lequel on utilise deux types ( 51, 54 ) différents d'amorceur,
dans lequel au moins l'un des amorceurs provoque une réticulation par de la chaleur,
et l'autre par du rayonnement électromagnétique.

29. Procédé suivant l'une ou plusieurs des revendications précédentes 24, à 28,
dans lequel on utilise plusieurs amorceurs ( 51, 52, 53, ... ) différents,
qui sont activés,
notamment qui sont activés spécifiquement en longueur d'onde.

30. Procédé suivant l'une ou plusieurs des revendications précédentes 24 à 29,
dans lequel on utilise comme amorceur du bis-hexafluoroantimonate sulfure de [4 ( diphénylsulfonium ) phényle].

31. Procédé suivant l'une ou plusieurs des revendications précédentes 24 à 30,
dans lequel on utilise comme amorceur du diphénylphosphinoxyde 2,4,6 triméthylbenzoyle.

32. Procédé suivant l'une ou plusieurs des revendications précédentes 18 à 31,
dans lequel on fait varier les amorceurs ( 51, 52, 53, 54, .... ) suivant l'épaisseur de la matière à enduire et à durcir, notamment en raison de leur activation spécifique en longueur d'onde,
d'une manière tout à fait particulière par des variations de la composition des amorceurs ( 51, 52, 53, 54, .... ) ou
de la concentration du ou des amorceurs ( 51, 52, 53, 54, ... ) .

33. Procédé suivant l'une ou plusieurs des revendications précédentes 18 à 32,
dans lequel on fait varier dans la matière enduite et à durcir sur son épaisseur les compositions de la matière à durcir et/ou de l'amorceur.

34. Procédé suivant l'une ou plusieurs des revendications précédentes 18 à 33,
dans lequel on règle la concentration d'un amorceur ( 51, 52, 53, ... ) dans la partie d'une surface ( 60 ) d'incidence à une valeur plus petite qu'au fond ( 61 ).

35. Machine électrique,
notamment génératrice,
qui a comme protection ( 1 ) anti-effluves,
notamment comme protection anti-effluves d'extrémité,
une protection anti-effluves suivant l'une ou plusieurs des revendications 1 à 17 ou une protection anti-effluves produite suivant l'une ou plusieurs des revendications 18 à 34.
